# EUROPEAN PATENT APPLICATION

(11) **EP 4 852 070 A1**
(43) Date of publication of application: **09.12.2026**
(21) Application number: 24927815.1
(22) Date of filing: 07.03.2024
(51) Int. Cl.: H01M 4/13, H01M 10/0525, H01M 10/0566, H01M 10/0568

(54) **POSITIVE ELECTRODE SHEET, BATTERY CELL, BATTERY AND ELECTRIC DEVICE**

(71) Applicant: Contemporary Amperex Technology Co., Limited, Ningde, Fujian 352100 (CN)
(72) Inventor: FENG, Fuxiang, Ningde, Fujian 352100 (CN); WANG, Hansen, Ningde, Fujian 352100 (CN); GE, Xiaoming, Ningde, Fujian 352100 (CN)
(74) Representative: Straus, Alexander
(86) International application number: PCT/CN2024/080572
(87) International publication number: WO 2025/184870

(57) **Abstract**

A positive electrode sheet, a battery cell, a battery and an electric device. The positive electrode sheet comprises a positive electrode current collector and a positive electrode film layer located on at least one side of the positive electrode current collector, wherein a preset lithium salt is dispersed in the positive electrode film layer, and the preset lithium salt comprises a first lithium salt having a structure shown in formula 1, where R1 and R2 each independently comprises a fluorine atom or a C1-Có fluoroalkyl group, and M1 is Li. The introduction of the preset lithium salt into the positive electrode sheet enables a battery cell using the positive electrode sheet to achieve good cycling performance.

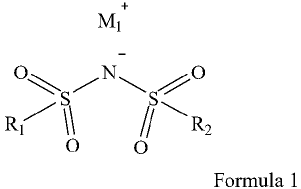

## Description

### TECHNICAL FIELD

The present application relates to a positive electrode plate, a battery cell, a battery, and an electrical apparatus.

### BACKGROUND

Lithium-ion battery cells have been widely used in many fields such as consumer electronics, electric vehicles and energy storage technologies, but their energy density is approaching the theoretical limit. To meet the demands for higher energy density in future applications such as electric vehicles and electric aircraft with extended ranges, it is necessary to develop battery cells using lithium metal negative electrodes. Electrolyte solutions play a crucial role in the stable operation of battery cells. Ester-based solvents are widely used for the electrolyte solutions in the lithium-ion battery cells. However, this electrolyte solution system is not suitable for battery cells using lithium metal negative electrodes. In addition, during charge and discharge cycles, the volume change of negative electrodes of lithium-ion batteries is relatively small, so the mechanical strength requirements for the solid-electrolyte interphase (SEI) film formed on negative electrode surfaces are not particularly high. However, the lithium metal negative electrodes are highly reactive and spontaneously react with the electrolyte solutions to form the SEI film with poor mechanical strength and chemical stability, and they may also induce dendritic growth on the lithium metal negative electrodes, leading to rapid deterioration of the cycle life of the battery cells using the lithium metal negative electrodes. The above description is merely intended to provide information of background art related to the present application, and does not necessarily constitute the prior art.

### SUMMARY

Embodiments of the present application provide a positive electrode plate, a battery cell, a battery and an electrical apparatus, enabling the battery to achieve good cycling performance.

In a first aspect, the present application provides a positive electrode plate, including a positive electrode current collector and a positive electrode film layer located on at least one side of the positive electrode current collector, wherein a preset lithium salt is dispersed in the positive electrode film layer, and the preset lithium salt includes a first lithium salt having a structure shown in Formula 1, where R₁ and R₂ each independently include a fluorine atom or a C1-C6 fluoroalkyl group, and M₁ is Li,

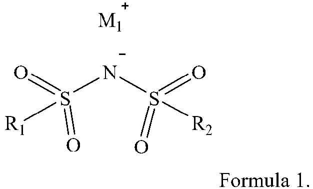

As an electrolyte salt is continuously consumed during the cycling process of a battery cell, the concentration of an electrolyte solution gradually decreases. The preset lithium salt in the positive electrode plate may be slowly dissolved into the electrolyte solution, thereby maintaining a high concentration of the electrolyte solution throughout the cycling process of the battery cell. Consequently, the solvation structure of the high-concentration electrolyte solution, as initially designed, can be maintained throughout the cycling process, ensuring that the electrolyte solution maintains high redox resistance, thereby improving the cycling performance of the battery cell. In addition, the preset lithium salt in the positive electrode plate may also serve as a positive electrode additive to improve the positive electrode film-formation quality and alleviate the issue of gas production, thereby improving the high-temperature performance of the battery cell.

In some embodiments, R₁ and R₂ each independently include a fluorine atom or a trifluoromethyl group.

In some embodiments, the mass percent of the first lithium salt in the positive electrode film layer ranges from 0.8 wt% to 10 wt%, and optionally from 2 wt% to 6.5 wt%.

In some embodiments, the preset lithium salt further includes a second lithium salt, and the second lithium salt includes one or more of lithium hexafluorophosphate, lithium tetrafluoroborate, lithium perchlorate, lithium hexafluoroarsenate, lithium trifluoromethanesulfonate, lithium difluoro(oxalato)borate, lithium bis(oxalato)borate, lithium difluorophosphate, lithium difluoro bis(oxalato)phosphate, and lithium tetrafluoro(oxalato)phosphate.

Optionally, the second lithium salt includes one or more of lithium hexafluorophosphate, lithium tetrafluoroborate, and lithium difluorophosphate.

In some embodiments, the molar ratio of the second lithium salt to the first lithium salt ranges from 0.02:1 to 0.2:1, and optionally from 0.02:1 to 0.1:1.

An appropriate amount of second lithium salt may further regulate the solvation structure and promote the desolvation process without significantly affecting the energy density of the battery cell, thereby enabling the battery cell to achieve better cycling performance.

In some embodiments, the positive electrode film layer includes a positive electrode active material, and the positive electrode active material includes one or more of lithium transition metal oxide, lithium-containing phosphate, and respective modified compounds thereof.

In a second aspect, the present application provides a battery cell, including the positive electrode plate according to the first aspect of the present application.

In some embodiments, the battery cell includes an electrolyte solution, the electrolyte solution includes an electrolyte salt and a solvent, the electrolyte salt includes a primary lithium salt, and the primary lithium salt includes a first lithium salt having a structure shown in Formula 1, where R₁ and R₂ each independently include a fluorine atom or a C1-C6 fluoroalkyl group, and M₁ is Li,

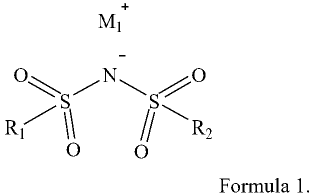

In some embodiments, the sum of the mass of the first lithium salt in the positive electrode film layer and the mass of the first lithium salt in the electrolyte solution is greater than the saturated dissolved quantity of the first lithium salt in the electrolyte solution.

Since the sum of the mass of the first lithium salt in the positive electrode film layer and the mass of the first lithium salt in the electrolyte solution is greater than the saturated dissolved quantity of the first lithium salt in the electrolyte solution, during the cycling process of the battery cell, the first lithium salt in the electrolyte solution is continuously consumed, the first lithium salt in the positive electrode film layer may be slowly dissolved into the electrolyte solution under the infiltration action of the electrolyte solution, thereby maintaining a high concentration of the electrolyte solution throughout the cycling process of the battery cell. Consequently, the solvation structure of the high-concentration electrolyte solution, as initially designed, can be maintained throughout the cycling process, ensuring that the electrolyte solution maintains high redox resistance, thereby enabling the battery cell to achieve good cycling performance.

In some embodiments, the solvent includes an ether compound. The ether compound is more compatible with lithium metal negative electrodes.

In some embodiments, the solvent includes one or more of methyl n-butyl ether, tetrahydrofuran, ethylene glycol dimethyl ether, tetraethylene glycol dimethyl ether, triethylene glycol dimethyl ether, diethylene glycol dimethyl ether, ethylene glycol diethyl ether, 1,2-dimethoxypropane, 1, 3-dimethoxypropane, diethylene glycol dimethyl ether, triethylene glycol dimethyl ether, and tetraethylene glycol dimethyl ether.

In some embodiments, the molar ratio of the primary lithium salt to the solvent in the electrolyte solution ranges from 1:0.8 to 1:3, and optionally from 1:1 to 1:2.

The primary lithium salt features a wide electrochemical window, high thermal stability, and high ionic conductivity, which may result in less high-voltage decomposition of the electrolyte solution and higher ionic transport rate. The high-concentration primary lithium salt enables lithium ions in the electrolyte solution to have a good solvation structure, ensuring that the electrolyte solution has good redox resistance, thereby enabling the battery cell to achieve better cycling performance.

In some embodiments, the electrolyte salt further includes a secondary lithium salt, and the secondary lithium salt includes one or more of lithium hexafluorophosphate, lithium tetrafluoroborate, lithium perchlorate, lithium hexafluoroarsenate, lithium trifluoromethanesulfonate, lithium difluoro(oxalato)borate, lithium bis(oxalato)borate, lithium difluorophosphate, lithium difluoro bis(oxalato)phosphate, and lithium tetrafluoro(oxalato)phosphate.

In some embodiments, the molar ratio of the secondary lithium salt to the primary lithium salt in the electrolyte solution ranges from 0.02:1 to 0.2:1, and optionally from 0.05:1 to 0.1:1.

A small amount of secondary lithium salt may regulate the solvation structure and promote the desolvation process. However, if the concentration of the secondary lithium salt is too high, it will significantly reduce the solubility of the primary lithium salt. Therefore, when the concentration of the secondary lithium salt in the electrolyte solution is within the above range, the battery cell may achieve better cycling performance.

In some embodiments, the electrolyte solution further includes a diluent, and the molar ratio of the primary lithium salt to the diluent in the electrolyte solution ranges from 1:0.5 to 1:5.

The addition of the diluent will not affect the unique solvation structure of the initial high-concentration electrolyte solution, and may improve the conductivity of the electrolyte solution.

In some embodiments, the diluent includes one or more of a fluoroether diluent, an aromatic diluent, and a fluorinated aromatic diluent.

In some embodiments, the diluent includes one or more of 1,1,2,2-tetrafluoroethyl-2,2,3,3-tetrafluoropropyl ether, 1,1,2,2-tetrafluoroethyl-2,2,2-trifluoroethyl, 1-(1,1,2,2-tetrafluoroethoxy)propane, ethyl 1,1,2,2-tetrafluoroethyl ether, bis(2,2,2-trifluoroethyl) ether, difluoromethyl 2,2,3, 3-tetrafluoropropyl ether, heptafluoropropyl 1,2,2,2-tetrafluoroethyl ether, 2,2,3,3,3-pentafluoropropyl-1,1,2,2-tetrafluoroethyl ether, bis-(1,2,2,2-tetrafluoroethyl) ether, difluoromethyl 1,1,2,3,3,3-pentafluoropropyl ether, 1,1,2,3,3,3-pentafluoropropyl-2,2,2-trifluoroethyl ether, 1H,1H,5H-octafluoropentyl-1,1,2,2-tetrafluoroethyl ether, benzene, 3-fluorobenzene, m-difluorobenzene, 1,3,5-trifluorobenzene, and anisole.

In some embodiments, the battery cell is a lithium metal battery cell or an anode-free lithium metal battery cell.

In a third aspect, the present application provides a battery, including the battery cell according to the second aspect of the present application.

In a fourth aspect, the present application provides an electrical apparatus, including the battery according to the third aspect of the present application, where the battery is configured to supply electric energy.

The electrical apparatus of the present application includes the battery provided in the present application, and therefore has at least the same advantages as the battery.

The preset lithium salt is introduced into the positive electrode plate of the present application. As the electrolyte salt is continuously consumed in the cycling process of the battery cell, the concentration of the electrolyte solution gradually decreases. The preset lithium salt in the positive electrode plate may be slowly dissolved into the electrolyte solution, thereby maintaining a high concentration of the electrolyte solution throughout the cycling process of the battery cell. Consequently, the solvation structure of the high-concentration electrolyte solution, as initially designed, can be maintained throughout the cycling process, ensuring that the electrolyte solution maintains high redox resistance, thereby improving the cycling performance of the battery cell. In addition, the preset lithium salt in the positive electrode plate may also serve as a positive electrode additive to improve the positive electrode film-formation quality and alleviate the issue of gas production, thereby improving the high-temperature performance of the battery cell.

### BRIEF DESCRIPTION OF DRAWINGS

In order to more clearly illustrate technical solutions of embodiments of the present application, drawings to be used in the embodiments of the present application will be briefly introduced below. Apparently, the drawings described below are merely some embodiments of the present application. For those of ordinary skills in the art, other drawings may also be obtained based on these drawings without any creative efforts.
FIG. 1 shows a schematic view of a battery cell according to some embodiments of the present application.
FIG. 2 shows a schematic exploded view of a battery cell according to some embodiments of the present application.
FIG. 3 shows a schematic view of a battery module according to some embodiments of the present application.
FIG. 4 shows a schematic view of a battery pack according to some embodiments of the present application.
FIG. 5 is a schematic exploded view of the battery pack shown in FIG. 4.
FIG. 6 shows a schematic view of an electrical apparatus according to some embodiments of the present application.

In the accompanying drawings, the figures are not necessarily drawn to actual scale.

Description of reference numerals: 1. battery pack; 2. upper box; 3. lower box; 4. battery module; 5. battery cell; 51. case; 52. electrode assembly; 53. cover plate.

### DETAILED DESCRIPTION OF EMBODIMENTS

Hereinafter, embodiments of a positive electrode plate, a battery cell, a battery and an electrical apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise particularly stated, all steps in the present application may be performed sequentially or may be performed randomly, and are preferably performed sequentially. For example, the method includes steps (a) and (b), which means that the method may include steps (a) and (b) performed sequentially, or may include steps (b) and (a) performed sequentially. For example, reference to the method may further include step (c), which means that step (c) may be added to the method in any order, e.g., the method may include steps (a), (b), and (c), or may include steps (a), (c), and (b), or may include steps (c), (a), and (b).

In the present application, the terms "a plurality of" and "multiple" refer to two or more.

In the description of the embodiments of the present application, unless otherwise specified, the first feature being "above" or "below" the second feature may refer to the first and second features being in direct contact with each other, or the first and second features coming into contact via a medium. In addition, the first feature being "above", "over", and "on upside of" the second feature may refer to the first feature being directly above or obliquely above the second feature, or simply means that the level of the first feature is higher than that of the second feature. The first feature being "below", "beneath", and "on underside of" the second feature may refer to the first feature being directly below and obliquely below the second feature, or simply means that the level of the first feature is less than that of the second feature.

Unless otherwise specified, terms used in this application have well-known meanings generally understood by persons skilled in the art.

Unless otherwise stated, values of parameters mentioned in the present application may be measured using various test methods commonly used in the art. For example, they may be measured according to the test methods given in the embodiments of the present application. Unless otherwise stated, the test temperature of each parameter is 25°C.

The battery mentioned in the embodiments of the present application may be a single physical module including one or more battery cells to provide higher voltage and capacity. For example, the battery mentioned in the present application may include, e.g., a battery cell, a battery module, or a battery pack.

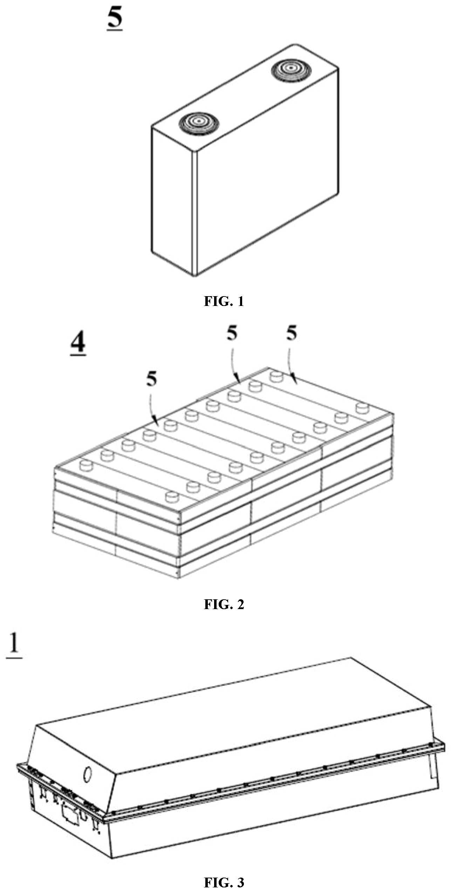

The battery cell is a smallest unit constituting a battery, and can implement charging and discharging functions by itself. The battery cell may be, e.g., a cylinder, a cuboid, or other shape, which is not limited in the embodiments of the present application. FIG. 1 is a battery cell 5 with a cuboid structure as an example.

When there are a plurality of battery cells, the plurality of battery cells are connected by series connection, or parallel connection, or parallel-series connection through a bus component. In some embodiments, the battery may be a battery module. When there are a plurality of battery cells, the plurality of battery cells are arranged and fixed to form a battery module. In some embodiments, the battery may be a battery pack. The battery pack includes a box body and a battery cell. The battery cell or the battery module is accommodated in the box body. In some embodiments, the box body may be a part of a vehicle chassis structure. For example, a portion of the box may become at least a part of the floor of the vehicle, or a portion of the box may become at least a part of a cross beam and a longitudinal beam of the vehicle.

In some embodiments, the battery cells may be assembled into a battery module, the number of battery cells included in the battery module may be multiple, and the specific number may be adjusted according to the application and capacity of the battery module. FIG. 2 is a schematic view of a battery module 4 as an example. As shown in FIG. 2, in the battery module 4, a plurality of battery cells 5 may be arranged sequentially along a length direction of the battery module 4, or, of course, may be arranged in any other manner. The plurality of battery cells 5 may further be fixed by fasteners.

Optionally, the battery module 4 may further include a shell having an accommodating space, and the plurality of battery cells 5 are accommodated in the accommodating space.

In some embodiments, the foregoing battery modules may further be assembled into a battery pack, and the number of battery modules included in the battery pack may be adjusted according to the application and capacity of the battery pack.

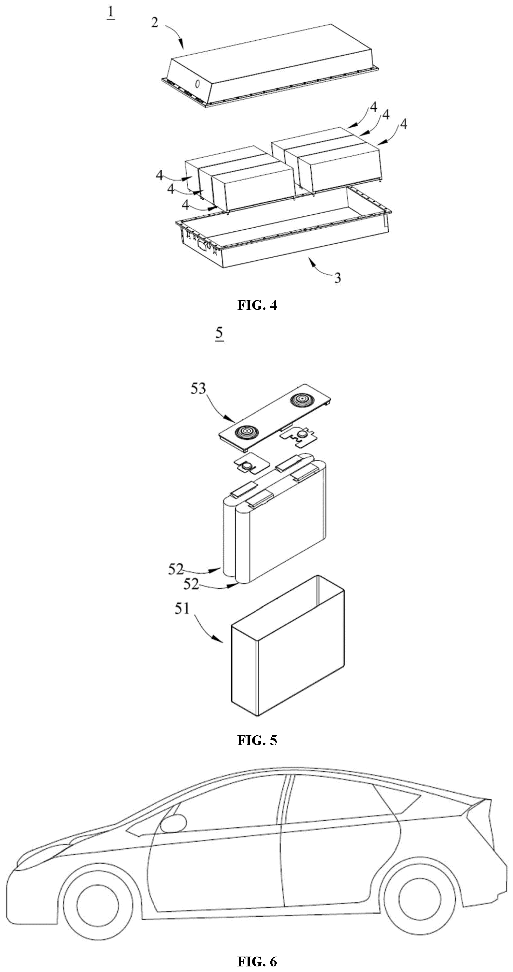

FIGS. 3 and 4 are schematic views of a battery pack 1 as an example. As shown in FIGS. 3 and 4, the battery pack 1 may include a box body and a plurality of battery modules 4 arranged in the box body. The box body includes an upper box 2 and a lower box 3. The upper box 2 is configured to cover the lower box 3 and form an enclosed space for accommodating the battery module 4. The plurality of battery modules 4 may be arranged in the box in any manner.

In some embodiments, the battery may be an energy storage apparatus. The energy storage apparatus includes an energy storage container, an energy storage electric cabinet, etc.

According to the embodiments of the present application, the battery cell may include a lithium metal battery cell or an anode-free lithium metal battery cell.

The anode-free lithium metal battery cell typically refers to a cell in which no negative electrode active material layer is intentionally provided at the negative electrode side during the manufacturing process. For example, during the manufacturing process of the battery cell, the negative electrode active material layer is not formed at the negative electrode by processes such as coating or deposition to create a layer, nor is it formed from a layer of carbonaceous active material. During the first charge, lithium ions receive electrons at the negative electrode side and deposit on the surface of a negative electrode current collector to form lithium metal. During discharge, lithium metal is converted back into lithium ions to return to a positive electrode, enabling charge and discharge cycles. Therefore, the anode-free lithium metal battery cell may be regarded as a battery cell using a lithium metal negative electrode. Compared to other battery cells, the anode-free lithium metal battery cell may achieve higher energy density because it lacks the negative electrode active material layer. In some embodiments, in order to improve the performance of the battery cell, some conventional materials that may be used as negative electrode active materials, such as carbon materials, may also be provided at the negative electrode side of the anode-free lithium metal battery cell. Although these materials have a certain capacity, because their content is low and they are not used as the primary negative electrode active material in the battery cell, the battery cell constructed in this manner may still be considered as an anode-free lithium metal battery cell The CB (Cell Balance) value of the anode-free lithium metal battery cell is typically very small. For example, in some embodiments, the CB value of the anode-free lithium metal battery cell may be less than or equal to 0.1. The CB value is the capacity per unit area of the negative electrode in the battery cell divided by the capacity per unit area of the positive electrode. Since the anode-free lithium metal battery cell includes no or only a small amount of negative electrode active material, the capacity per unit area of the negative electrode is small, resulting in a very small CB value, which is, for example, typically less than or equal to 0.1.

The battery cell includes an electrode assembly. The electrode assembly may be of a wound structure or a stacked structure, which is not limited in the embodiments of the present application.

The battery cell may further include an outer package, which may be used for encapsulating the electrode assembly. The outer package may be a hard case, such as a hard plastic case, an aluminum case, or a steel case. The outer package may also be a soft package, such as a pouch. The material of the pouch may be plastics, such as one or more of polypropylene (PP), polybutylene terephthalate (PBT) and polybutylene succinate (PBS).

In some embodiments, as shown in FIG. 5, the outer package may include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 is used to cover the opening to close the accommodating cavity. The electrode assembly 52 is encapsulated within the accommodating cavity. The number of electrode assemblies 52 included in the battery cell 5 may be one or more, and may be adjusted according to requirements.

To address the issues of the battery cell using the lithium metal negative electrode, a high-concentration electrolyte solution (HCE) is commonly used to match the lithium metal negative electrode at present. The high-concentration electrolyte solution has good redox resistance due to its unique solvation structure, and may be better compatible with a high-voltage positive electrode active material.

In addition, during the deposition and stripping of lithium in the battery cell with the high-concentration electrolyte solution, the SEI film is constantly broken and regenerated. This process primarily consumes the electrolyte salt rather than the solvent, causing the concentration of the electrolyte solution to continuously decrease during the cycling process of the battery cell, making it difficult to maintain the solvation structure of the initial high-concentration electrolyte solution. This further decreases the redox resistance of the electrolyte solution rapidly during the cycling process of the battery cell, and accordingly the cycle life of the battery cell fails to meet higher performance requirements. The higher the initial concentration of the electrolyte solution, the more conducive it is to maintaining the solvation structure of the high-concentration electrolyte solution. However, the concentration of the high-concentration electrolyte solution is already approaching its limit, and it is currently difficult to maintain the solvation structure of the electrolyte solution by further increasing its concentration.

In view of this, according to the present application from the perspective of the positive electrode, the introduction of the preset lithium salt into the positive electrode plate enables the battery cell using the positive electrode plate to achieve good cycling performance.

Embodiments of the present application provide a positive electrode plate.

The positive electrode plate includes a positive electrode current collector and a positive electrode film layer located on at least one side of the positive electrode current collector. A preset lithium salt is dispersed in the positive electrode film layer, and the preset lithium salt includes a first lithium salt having a structure shown in Formula 1, where R₁ and R₂ each independently include a fluorine atom or a C1-C6 fluoroalkyl group, and M₁ is Li.

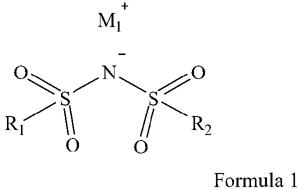

As an electrolyte salt is continuously consumed during the cycling process of a battery cell, the concentration of an electrolyte solution gradually decreases. The preset lithium salt in the positive electrode plate may be slowly dissolved into the electrolyte solution, thereby maintaining a high concentration of the electrolyte solution throughout the cycling process of the battery cell. Consequently, the solvation structure of the high-concentration electrolyte solution, as initially designed, can be maintained throughout the cycling process, ensuring that the electrolyte solution maintains high redox resistance, thereby improving the cycling performance of the battery cell. In addition, the preset lithium salt in the positive electrode plate may also serve as a positive electrode additive to improve the positive electrode film-formation quality and alleviate the issue of gas production, thereby improving the high-temperature performance of the battery cell.

R₁ and R₂ each independently include a fluorine atom or a C1-C6 fluoroalkyl group. The C1-C6 fluoroalkyl group refers to a C1-C6 alkyl group in which at least one hydrogen atom is substituted with a fluorine atom. It may also be a group in which all hydrogen atoms are substituted with fluorine atoms, such as a trifluoromethyl group, a pentafluoroethyl group, or a heptafluoropropyl group.

Optionally, R₁ and R₂ may each independently include a fluorine atom or a trifluoromethyl group. Further optionally, R₁ and R₂ may both be fluorine atoms.

Optionally, the first lithium salt may include one or a combination of lithium bis(fluorosulfonyl)imide (LiFSI), and lithium bis(trifluoromethylsulfonyl)imide (LiTFSI).

Further optionally, the first lithium salt may include lithium bis(fluorosulfonyl)imide (LiFSI).

In the positive electrode plate provided in the embodiments of the present application, the preset lithium salt is dispersed in the positive electrode film layer. For example, the preset lithium salt may be dispersed among positive electrode active material particles.

The dispersing of the preset lithium salt in the positive electrode film layer facilitates the uniform diffusion of the preset lithium salt into the electrolyte solution during the cycling process of the battery cell, thereby maintaining a high concentration of the electrolyte solution throughout the cycling process. Consequently, the solvation structure of the high-concentration electrolyte solution, as initially designed, can be maintained throughout the cycling process, ensuring that the electrolyte solution maintains high redox resistance, thereby improving the cycling performance of the battery cell.

In some embodiments, the preset lithium salt may be uniformly distributed along a thickness direction of the positive electrode film layer, i.e., the preset lithium salt may have equal content. In some alternative embodiments, the preset lithium salt may have content distributed in a gradient along the thickness direction of the positive electrode film layer, for example, the preset lithium salt may have a higher content on the surface of the positive electrode film layer.

In some embodiments, the mass percent of the first lithium salt in the positive electrode film layer may range from 0.8 wt% to 10 wt%; for example, it may be 0.8 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 9.5 wt%, 10 wt%, or may fall within a range consisting of any of the above values.

An increase in the mass percent of the primary lithium salt in the positive electrode film helps to maintain the solvation structure of the high-concentration electrolyte solution, as initially designed, during the cycling process of the battery cell. However, if the mass percent of the primary lithium salt in the positive electrode film layer is too high, it will not only reduce the energy density of the battery cell but may also hinder electrolyte solution transport.

When the mass percent of the first lithium salt in the positive electrode film layer falls within the aforementioned range, the solvation structure of the high-concentration electrolyte solution as initially designed can be better maintained throughout the cycling process of the battery cell without significantly affecting the energy density of the battery cell, ensuring that the electrolyte solution maintains high redox resistance, thereby enabling the battery cell to achieve better cycling performance.

Optionally, the mass percent of the first lithium salt in the positive electrode film layer may range from 2 wt% to 6.5 wt%.

In some embodiments, the preset lithium salt may further include a second lithium salt.

The second lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium trifluoromethanesulfonate (LiOTf), lithium difluoro(oxalato)borate (LiDFOB), lithium bis(oxalato)borate (LiBOB), lithium difluorophosphate (LiPO₂F₂), lithium difluoro bis(oxalato)phosphate (LiDFBOP), and lithium tetrafluoro(oxalato)phosphate (LiOTFP).

The second lithium salt in the positive electrode plate may further regulate the solvation structure and promote the desolvation process, thereby further improving the cycling performance of the battery cell.

Optionally, the second lithium salt may include one or more of lithium hexafluorophosphate (LiPF₆), lithium tetrafluoroborate (LiBF₄), and lithium difluorophosphate (LiPO₂F₂).

Optionally, the molar ratio of the second lithium salt to the first lithium salt may range from 0.02:1 to 0.2:1; for example, it may be 0.02:1, 0.03:1, 0.04:1, 0.05:1, 0.06:1, 0.07:1, 0.08:1, 0.09:1, 0.1:1, 0.11:1, 0.12:1, 0.13:1, 0.14:1, 0.15:1, 0.16:1, 0.17:1, 0.18:1, 0.19:1, 0.2:1, or fall within a range consisting of any of the above values. Optionally, the molar ratio of the second lithium salt to the first lithium salt may range from 0.02:1 to 0.15:1, 0.05:1 to 0.15:1, 0.02:1 to 0.1:1, or 0.05:1 to 0.1:1.

An appropriate amount of second lithium salt may further regulate the solvation structure and promote the desolvation process without significantly affecting the energy density of the battery cell, thereby enabling the battery cell to achieve better cycling performance.

The mass percent of the first lithium salt, the mass percent of the second lithium salt, and the molar ratio of the second lithium salt to the first lithium salt in the positive electrode film layer may be determined by the following method: detaching the positive electrode plate from the battery cell, soaking it in a known mass of ethylene glycol dimethyl ether (DME) for a period of time, taking the positive electrode plate out, and weighing the DME again, where the difference between mass values obtained from two weighings represents the mass of the preset lithium salt; taking an appropriate amount of the liquid after soaking, and using ion chromatography (IC) to measure the content of the first lithium salt and the content of the second lithium salt, and accordingly calculating to obtain the mass percent of the first lithium slat and the mass percent of the second lithium salt in the positive electrode film layer and the molar ratio of the second lithium salt to the first lithium salt.

In the above test, the battery cell refers to a fresh battery cell, such as a brand-new battery cell or a battery cell with no more than 50 charge and discharge cycles. In response to a large number of charge and discharge cycles of the battery cell, a large amount of preset lithium salt in the positive electrode film may be dissolved out, which may lead to substantial deviations in the test results.

The positive electrode current collector has two opposite surfaces in the direction of its own thickness, and the positive electrode film layer is provided on either or both of the two opposite surfaces of the positive electrode current collector.

In some embodiments, the positive electrode film layer includes a positive electrode active material, and the positive electrode active material may include one or more of lithium transition metal oxide, lithium-containing phosphate, and respective modified compounds thereof.

Examples of the lithium transition metal oxide may include, but are not limited to, one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and respective modified compounds thereof. Lithium transition metal oxide may include, but is not limited to, a layered structure and a spinel structure.

Examples of the lithium-containing phosphate may include, but are not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and respective modified compounds thereof.

In some embodiments, in order to further increase the energy density of the battery cell, the positive electrode active material may include one or more of lithium transition metal oxide with a general formula of LiₐNi_{b}Co_{c}M_{d}OₑD_{f} and a modified compound thereof. 0.8≤a≤1.2, 0.5≤b<1, 0<c<1, 0<d<1, 1≤e≤2, and 0≤f≤1, where M may include, but is not limited to, one or more of Ge, Mo, Sn, Mn, Al, Zr, Zn, Cu, Cr, Mg, Fe, V, Ti, and B, and D may include, but is not limited to, one or more of N, F, S, and Cl.

For example, the positive electrode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.80}Co_{0.15}Al_{0.05}O₂, and LiFePO₄.

The charging and discharging process of the battery cell is accompanied with deintercalation and consumption of Li, the molar content of Li varies as the state to which the battery cell is discharged varies. In the enumeration of positive electrode active materials in the embodiments of the present application, the molar content of Li is an initial state of the material, that is, a state before feeding. The positive electrode active material is used in the battery cell. After charge-discharge cycles, the molar content of Li may change.

In the enumeration of positive electrode active materials in the embodiments of the present disclosure, the molar content of O is only a theoretical value. Lattice oxygen evolution causes the molar content of O to change, and the actual molar content of O will fluctuate.

The above-mentioned modified compounds of the various positive electrode active materials may be obtained by modifying the positive electrode active materials by doping and/or surface coating.

In some embodiments, the positive electrode film layer further optionally includes a positive electrode conductive agent. As an example, the positive electrode conductive agent may include, but is not limited to, one or more of superconducting carbon, conductive graphite, acetylene black, carbon black, Ketjen black, carbon dot, carbon nanotube, graphene, or carbon nanofiber.

In some embodiments, the positive electrode film layer may further optionally include a positive electrode binder. For example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride -hexafluoropropylene-tetrafluoroethylene terpolymer, tetrafluoroethylene-hexafluoropropylene copolymer, polyethylene oxide, fluorine-containing acrylic resin, styrene-butadiene rubber (SBR), water-soluble unsaturated resin SR-1B, water-based acrylic resin (e.g., polyacrylic acid (PAA), polymethyl acrylate (PMAA), and sodium polyacrylate (PAAS)), polyacrylamide (PAM), polyvinyl alcohol (PVA), sodium alginate (SA), and carboxymethyl chitosan (CMCS).

In some embodiments, the positive electrode current collector may be a metal foil current collector or a composite current collector. As an example, the metal foil may be an aluminum foil. The composite current collector may include a polymer material substrate layer and a metal material layer formed on at least one surface of the polymer material substrate layer. As an example, the metal material may include, but is not limited to, one or more of aluminium, aluminum alloy, nickel, nickel alloy, titanium, titanium alloy, silver, and silver alloy. As an example, the polymer material substrate layer may include, but is not limited to, one or more of polypropylene (PP), polyethylene terephthalate (PET), polybutylene terephthalate (PBT), polystyrene (PS), and polyethylene (PE).

Embodiments of the present application further provide a method for preparing a positive electrode plate.

In some embodiments, a positive electrode active material, a positive electrode conductive agent, a positive electrode binder, and a preset lithium salt may be dispersed in a solvent in a predetermined proportion, and evenly stirred to obtain a positive electrode slurry; next, the positive electrode slurry is applied onto a positive electrode current collector, followed by drying and cold pressing to obtain a positive electrode plate with the preset lithium salt. The solvent may be, but is not limited to, N-methylpyrrolidone (NMP). The solid content of the positive electrode slurry may range from 50% to 80%. The introduction of the preset lithium salt during the preparation of the positive electrode slurry allows for a more uniform distribution of the preset lithium salt in the positive electrode film layer, which facilitates the uniform diffusion of the preset lithium salt into the electrolyte solution and, consequently enables the battery cell to achieve better cycling performance.

In some alternative embodiments, a positive electrode active material, a positive electrode conductive agent, and a positive electrode binder may be dispersed in a solvent in a predetermined proportion, and evenly stirred to obtain a positive electrode slurry; next, the positive electrode slurry is applied onto a positive electrode current collector and dried to obtain a positive electrode plate; a solution containing the dissolved preset lithium salt is applied onto the surface of the positive electrode plate, and the positive electrode plate is transferred into an oven for further drying after thorough impregnation, followed by cold pressing to obtain a positive electrode plate with the preset lithium salt. The solvent in the positive electrode slurry may be, but is not limited to, N-methylpyrrolidone (NMP). The solid content of the positive electrode slurry may range from 60% to 80%. The concentration of the solution containing the dissolved preset lithium salt may range from 0.1 mol/L to 3 mol/L, and the solvent may include one or more of N-methylpyrrolidone, ethylene glycol dimethyl ether, and ethylene glycol diethyl ether.

In some alternative embodiments, a positive electrode active material, a positive electrode conductive agent, and a positive electrode binder may be dispersed in a solvent in predetermined proportions, and evenly stirred to obtain a positive electrode slurry; next, the positive electrode slurry is applied onto a positive electrode current collector and dried and cold-pressed to obtain a positive electrode plate; a solution containing the dissolved preset lithium salt is applied onto the surface of the positive electrode plate, and the positive electrode plate is transferred into an oven for further drying after thorough impregnation, so as to obtain a positive electrode plate with the preset lithium salt. The solvent in the positive electrode slurry may be, but is not limited to, N-methylpyrrolidone (NMP). The solid content of the positive electrode slurry may range from 60% to 80%. The concentration of the solution containing the dissolved preset lithium salt may range from 0.1 mol/L to 3 mol/L, and the solvent may include one or more of N-methylpyrrolidone, ethylene glycol dimethyl ether, and ethylene glycol diethyl ether.

Embodiments of the present application further provide a battery cell, which includes the positive electrode plate with the preset lithium salt according to the embodiments of the present application. Accordingly, the battery cell according to the embodiments of the present application may have a longer cycle life.

According to the embodiments of the present application, the battery cell may be a lithium metal battery cell or an anode-free lithium metal battery cell.

The battery cell includes an electrolyte solution. The electrolyte solution includes an electrolyte salt and a solvent.

The electrolyte salt includes a primary lithium salt, and the primary lithium salt includes a first lithium salt having a structure shown in Formula 1, where R₁ and R₂ each independently include a fluorine atom or a C1-C6 fluoroalkyl group, and M₁ is Li.

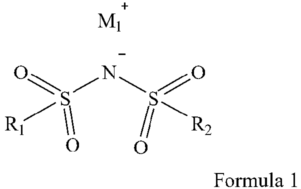

The electrolyte solution includes a first lithium salt, and the first lithium salt serves as the primary lithium salt, which may form a high-concentration electrolyte solution. This enables the electrolyte solution to have a good solvation structure and good redox resistance, thereby enabling the battery cell to achieve good cycling performance.

The first lithium salt features a wide electrochemical window, high thermal stability, and high ionic conductivity, which may result in less high-voltage decomposition of the electrolyte solution and higher ionic transport rate.

In some embodiments, the sum of the mass of the first lithium salt in the positive electrode film layer and the mass of the first lithium salt in the electrolyte solution may be greater than the saturated dissolved quantity of the first lithium salt in the electrolyte solution.

Since the sum of the mass of the first lithium salt in the positive electrode film layer and the mass of the first lithium salt in the electrolyte solution is greater than the saturated dissolved quantity of the first lithium salt in the electrolyte solution, during the cycling process of the battery cell, the first lithium salt in the electrolyte solution is continuously consumed, the first lithium salt in the positive electrode film layer may be slowly dissolved into the electrolyte solution under the infiltration action of the electrolyte solution, thereby maintaining a high concentration of the electrolyte solution throughout the cycling process of the battery cell. Consequently, the solvation structure of the high-concentration electrolyte solution, as initially designed, can be maintained throughout the cycling process, ensuring that the electrolyte solution maintains high redox resistance, thereby enabling the battery cell to achieve good cycling performance.

The electrolyte solution includes a solvent. In some embodiments, the solvent may include an ether compound. This is because the ether compound is more compatible with lithium metal negative electrodes.

Optionally, the solvent may include one or more of methyl n-butyl ether (MBE), tetrahydrofuran (THF), ethylene glycol dimethyl ether (DME), tetraethylene glycol dimethyl ether, triethylene glycol dimethyl ether, diethylene glycol dimethyl ether, ethylene glycol diethyl ether (DEE), 1,2-dimethoxypropane (DMP1), 1, 3-dimethoxypropane (DMP2), diethylene glycol dimethyl ether, triethylene glycol dimethyl ether, and tetraethylene glycol dimethyl ether.

In some embodiments, the molar ratio of the primary lithium salt to the solvent in the electrolyte solution may range from 1:0.8 to 1:3; for example, it may be 1:0.8, 1:1, 1:1.2, 1:1.4, 1:1.6, 1:1.8, 1:2, 1:2.2, 1:2.4, 1:2.6, 1:2.8, 1:3, or fall within a range consisting of any of the above values. Optionally, the molar ratio of the primary lithium salt to the solvent in the electrolyte solution may range from 1:1 to 1:2.

The primary lithium salt features a wide electrochemical window, high thermal stability, and high ionic conductivity, which may result in less high-voltage decomposition of the electrolyte solution and higher ionic transport rate. The high-concentration primary lithium salt enables lithium ions in the electrolyte solution to have a good solvation structure, ensuring that the electrolyte solution has good redox resistance, thereby enabling the battery cell to achieve better cycling performance.

In some embodiments, the electrolyte salt may further include a secondary lithium salt; optionally, the secondary lithium salt may include, but is not limited to, one or more of lithium hexafluorophosphate, lithium tetrafluoroborate, lithium perchlorate, lithium hexafluoroarsenate, lithium trifluoromethanesulfonate, lithium difluoro(oxalato)borate, lithium bis(oxalato)borate, lithium difluorophosphate, lithium difluoro bis(oxalato)phosphate, and lithium tetrafluoro(oxalato)phosphate, and optionally may include one or more of lithium hexafluorophosphate, lithium tetrafluoroborate, and lithium difluorophosphate.

In some embodiments, the molar ratio of the secondary lithium salt to the primary lithium salt in the electrolyte solution may range from 0.02:1 to 0.2:1; for example, it may be 0.02:1, 0.03:1, 0.04:1, 0.05:1, 0.06:1, 0.07:1, 0.08:1, 0.09:1, 0.1:1, 0.12:1, 0.14:1, 0.16:1, 0.18:1, 0.2:1, or fall within a range consisting of any of the above values. Optionally, the molar ratio of the secondary lithium salt to the primary lithium salt in the electrolyte solution may range from 0.02:1 to 0.1:1, or from 0.05:1 to 0.1:1.

A small amount of secondary lithium salt may regulate the solvation structure and promote the desolvation process. Therefore, when the concentration of the secondary lithium salt in the electrolyte solution is within the above range, the battery cell may achieve better cycling performance.

In some embodiments, the electrolyte solution may further include a diluent such that a localized high-concentration electrolyte solution (LHCE) may be formed. The localized high-concentration electrolyte solution is formed by adding a diluent into a high-concentration electrolyte solution, where this diluent is miscible with the solvent but has extremely poor solubility for the electrolyte salt. The addition of the diluent will not affect the unique solvation structure of the initial high-concentration electrolyte solution, and may improve the viscosity and the conductivity of the electrolyte solution.

Optionally, the diluent may include one or more of a fluoroether diluent, an aromatic diluent, and a fluorinated aromatic diluent.

Further optionally, the diluent may include, but is not limited to, one or more of 1,1,2,2-tetrafluoroethyl-2,2,3,3-tetrafluoropropyl ether (TTE), 1,1,2,2-tetrafluoroethyl-2,2,2-trifluoroethyl (TFE), 1-(1,1,2,2-tetrafluoroethoxy)propane (TFEPE), ethyl 1,1,2,2-tetrafluoroethyl ether (ETE), bis(2,2,2-trifluoroethyl) ether (BTFE), difluoromethyl 2,2,3, 3-tetrafluoropropyl ether, heptafluoropropyl 1,2,2,2-tetrafluoroethyl ether, 2,2,3,3,3-pentafluoropropyl-1,1,2,2-tetrafluoroethyl ether, bis-(1,2,2,2-tetrafluoroethyl) ether, difluoromethyl 1,1,2,3,3,3-pentafluoropropyl ether, 1,1,2,3,3,3-pentafluoropropyl-2,2,2-trifluoroethyl ether, 1H,1H,5H-octafluoropentyl-1,1,2,2-tetrafluoroethyl ether, benzene (BZ), 3-fluorobenzene, m-difluorobenzene, 1,3,5-trifluorobenzene, and anisole.

In some embodiments, the molar ratio of the primary lithium salt to the dilute in the electrolyte solution may range from 1:0.5 to 1:5; for example, it may be 1:0.5, 1: 0.8, 1:1, 1:1.3, 1:1.5, 1:2, 1:2.5, 1:3, 1:3.5, 1:4, 1:4.5, 1:5, or fall within a range consisting of any of the above values.

Depending on the different type of diluent and the different content of the electrolyte salt, the amount of diluent used may vary.

In some embodiments, the electrolyte solution may further include additives. For example, the additives may include a negative electrode film-formation additive, a positive electrode film-formation additive, or an additive capable of improving certain performance of the battery cell, such as an additive capable of improving overcharge performance of the battery cell, an additive capable of improving high-temperature performance of the battery cell, or an additive capable of improving low-temperature power performance of the battery cell.

In some embodiments, the viscosity of the electrolyte solution at 25°C may range from 2 mPa.s to 50 mPa.s, and optionally from 3 mPa.s to 15 mPa.s. This helps to ensure the battery cell having a long cycle life.

The viscosity of the electrolyte solution may be measured by means of a viscometer. A shear force exerted on a rotor as it continues to rotate at a constant speed in a sample causes a spring to generate a torque, and the torque is proportional to the viscosity, from which a viscosity value is obtained.

For example, the viscosity of the electrolyte solution may be measured by the following methods: under conditions where the ambient humidity is less than 80%, taking 30 mL of the sample in a water bath and maintaining it at a constant temperature of 25°C for at least 30 min; mounting a rotor (e.g., rotor No. 18) into a sample cup, filling the cup with the sample to a level approximately 0.3 cm below the rim of the cup, starting a viscometer connected thereto, setting the rotation speed to 70 RPM, and rotating for 5 min to read a result, so as to obtain the viscosity value. During measurement, 10 data points may be collected and averaged. The measurement instrument may be a Bollerfeld DV-2TLV viscometer.

In some embodiments, the conductivity of the electrolyte solution at 25°C may range from 1 mS/cm to 15 mS/cm, and optionally from 3 mS/cm to 8 mS/cm.

The conductivity of the electrolyte solution may be measured by means of a conductivity meter. For example, the measuring method includes taking an appropriate amount of electrolyte solution, dividing it evenly into three parts, and then using the conductivity meter to measure the conductivity of each sample at 25°C; next, calculating an average of the test results as the conductivity of the electrolyte solution. The measurement instrument may be a DDS-307 conductivity meter.

The electrolyte solution may be prepared by a method known in the art.

In some embodiments,the battery cell includes a negative electrode plate. The negative electrode plate includes a negative current collector and a lithium metal layer located on at least one side of the negativecurrent collector, which may be assembled into a lithium metal battery cell. The lithium metal layer may include lithium metal or an alloy formed from lithium metal and other metallic elements or non-metallic elements. The other metallic elements may include one or more of Sn, Zn, Al, Mg, Ag, Au, Ga, In, and Pt. The non-metallic elements may include one or more of B, C and Si.

In some embodiments, the negative electrode plate may include a negative electrode current collector but not include a lithium metal layer, which may be assembled into an anode-free lithium metal battery cell. Optionally, a modified layer that can improve the lithium metal deposition behavior is provided on the surface of the negative electrode current collector of the anode-free lithium metal battery cell. For example, the modified layer may include a lithiophilic material.

In some embodiments, the negative electrode current collector may include a metal foil, a three-dimensional porous current collector or a composite current collector. As an example, the metal foil may be a copper foil, a copper alloy foil, a nickel foil, or an aluminum alloy foil. As an example, the three-dimensional porous current collector may be copper mesh, nickel mesh, copper foam, or nickel foam. The composite current collector may include a polymer material substrate layer and a metal material layer formed on at least one surface of the polymer material substrate layer. As an example, the metal material may include, but is not limited to, one or more of copper, copper alloy, nickel, nickel alloy, titanium, titanium alloy, silver, and silver alloy. As an example, the polymer material substrate layer may include, but is not limited to, one or more of polypropylene (PP), polyethylene terephthalate (PET), polybutylene terephthalate (PBT), polystyrene (PS), and polyethylene (PE).

The battery cell may further include a separator. The separator is located between the positive electrode plate and the negative electrode plate, and mainly functions to prevent internal short circuits. The type of the separator is not particularly limited in the present application, and any well-known porous-structure separator having good chemical stability and mechanical stability may be selected for use. In some embodiments, the material of the separator may include, but is not limited to, one or more of glass fiber, non-woven cloth, polyethylene, polypropylene, polyimide, and polyvinylidene fluoride. The separator may be a single-layer film or a multi-layer composite film. When the separator is a multi-layer composite film, the materials of the layers may be the same or different.

The charge/discharge rate of the battery cell in the embodiments of the present application may range from 0.01C and 8C.

The ambient temperature for the cycling of the battery cell according to the embodiments of the present application may range from -30°C to 60°C.

The method for preparing the battery cell is well known. In some embodiments, a positive electrode plate, a separator, a negative electrode plate, and an electrolyte solution may be assembled into a battery cell. As an example, the positive electrode plate, the separator, and the negative electrode plate may be formed into an electrode assembly through winding and/or lamination, and the electrode assembly is placed in an outer package, dried, and injected with the aforementioned electrolyte solution, followed by processes such as vacuum encapsulation and standing to obtain a battery cell. A plurality of battery cells may be connected in series or in parallel or in series-parallel to form a battery module. A plurality of battery modules may be further connected by series connection or parallel connection or parallel-series connection to form a battery pack. In some embodiments, the plurality of battery cells may also directly form a battery pack.

Embodiments of the present application further provide an electrical apparatus. The electrical apparatus includes the battery according to the embodiments of the present application. The battery may be used as a power source of the electrical apparatus, or may be used as an energy storage unit of the electrical apparatus. The electrical apparatus may be, but is not limited to, a mobile device (e.g., a mobile phone, a tablet computer, and a laptop), an electric vehicle (e.g., an all-electric vehicle, a hybrid electric vehicle, a plug-in hybrid electric vehicle, an electric bicycle, an electric scooter, an electric golf cart, and an electric truck), an electric train, a ship and a satellite, an energy storage system, and the like.

The electrical apparatus may select the type of the battery, such as the battery cell, the battery module, or the battery pack, according to use requirements thereof.

FIG. 6 is a schematic view of an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be thin and light, and may use a battery cell as a power source.

### Examples

The following examples more specifically describe the contents disclosed in the present application. These examples are intended for illustrative purposes only, because various modifications and changes made within the scope of the contents disclosed in the present application will be apparent to those skilled in the art. Unless otherwise stated, all parts, percentages, and ratios reported in the following examples are based on weight, all reagents used in the examples are commercially available or synthesized in a conventional manner, and can be used directly without further treatment, and all instruments used in the examples are commercially available.

### Example 1

### (1) Preparation of a positive electrode plate

A positive electrode active material (LiNi_{0.8}Co_{0.1}Mn_{0.1}O₂), a positive electrode conductive agent (acetylene black), a positive electrode binder (polyvinylidene fluoride), and a first lithium salt (lithium bis(fluorosulfonyl)imide (LiFSI)) were mixed at a mass ratio of 100:1:1:1, and then N-methylpyrrolidone was added as a solvent with evenly stirring, to obtain a positive electrode slurry with a solid content of 50%. The positive electrode slurry was evenly applied on both sides of a positive electrode current collector aluminum foil and dried at room temperature (about 25°C), then the aluminum foil coated with the positive electrode slurry was transferred into an oven for further drying, and cold-pressed to obtain a positive electrode plate with a preset lithium salt. The positive electrode plate was cut into rectangles of 40mm×50mm for later use, where the capacity of one side of the positive electrode ranges between 3.5 mAh/cm² and 5 mAh/cm².

### (2) Preparation of a negative electrode plate

A 50 µm lithium foil was rolled to cover an 8 µm copper foil to serve as a negative electrode plate, and then the negative electrode plate was cut into rectangles of 41 mm×51 mm for later use.

### (3) Preparation of an electrolyte solution

Ethylene glycol dimethyl ether (DME), 1,1,2,2-tetrafluoroethyl 2,2,3,3-tetrafluoropropylether (TTE), and lithium bis(fluorosulfonyl)imide (LiFSI) as a primary lithium salt were mixed evenly to obtain an electrolyte solution. The molar ratio of LiFSI to DME was 1:1.1, and the molar ratio of LiFSI to TTE was 1:1.5.

### (4) Preparation of a separator

A polyethylene porous film was used as a separator.

### (5) Preparation of a lithium metal battery cell

A piece of pre-cut positive electrode plate with the preset lithium salt and two pieces of pre-cut negative electrode plates were taken, and separated by means of the separator, and then were enclosed in an aluminum-plastic film pouch to form a stacked electrode assembly. 0.3 g of the electrolyte solution prepared above was injected, and the aluminum-plastic film pouch was sealed by hot pressing in vacuum, followed by standing at room temperature (about 25°C) for at least 6 hours. After that, the capacity and cycling performance tests were began.

The capacity of the lithium metal battery cell may be measured using the following method: at 25°C, letting the lithium metal battery cell stand for 5 min, then discharging at a constant current of 0.1C until the voltage reaches 2.8V; after letting it stand for another 5 min, charging at a constant current of 0.1C until the voltage reaches 4.3V, and then charging at a constant voltage of 4.3V until the current reaches 0.05C; after standing for 5 min, discharging at a constant current of 0.1C until the voltage reaches 2.8V, and recording the discharge capacity at this point as the capacity of the lithium metal battery cell. Here, the capacity of the lithium metal battery cell was 140 mAh.

With the ambient temperature set to 25°C, the prepared lithium metal battery cell was subjected to a charge-discharge cycle test at a rate of 0.2C (i.e., 28 mA), with cut-off voltages of 4.3V and 2.8V for charging and discharging, respectively. When the discharge capacity after cycling had degraded to 80% of the first-cycle discharge capacity, the lithium metal battery cell was considered to have reached the end of its life, and the number of cycles was recorded.

With the ambient temperature set to 60°C, the prepared lithium metal battery cell was subjected to a charge-discharge cycle test at a rate of 0.2C (i.e., 28 mA), with cut-off voltages of 4.3V and 2.8V for charging and discharging, respectively. When the discharge capacity after cycling had degraded to 80% of the first-cycle discharge capacity, the lithium metal battery cell was considered to have reached the end of its life, and the number of cycles was recorded.

### Examples 2 to 5

The method for preparing the lithium metal battery cell and the method for testing the cycling performance are the same as those described in Example 1, with the exception of the mass ratio between the positive electrode active material, the negative electrode conductive agent, the positive electrode binder, and the first lithium salt, as detailed in Table 1.

### Comparative Example 1

The method for preparing the lithium metal battery cell and the method for testing the cycling performance are the same as those described in Example 1, with the exception that no first lithium salt was added during the preparation of the positive electrode plate.

### Comparative Example 2

The method for preparing the lithium metal battery cell and the method for testing the cycling performance are the same as those described in Example 1, with the exception of the preparation process for the positive electrode plate.

### (1) Preparation of a positive electrode plate

First, LiNi_{0.8}Co_{0.1}Mn_{0.1}O₂ was coated with lithium bis(fluorosulfonyl)imide (LiFSI). LiFSI was mixed with LiNi_{0.8}Co_{0.1}Mn_{0.1}O₂ at a mass ratio of 100:1 and ball-milled with high energy at a stirring speed of 600 r/min for 2.5 h, followed by sieving to obtain a coated positive electrode active material.

The coated positive electrode active material, a positive electrode conductive agent (acetylene black), and a positive electrode binder (polyvinylidene fluoride) were mixed, and then N-methylpyrrolidone was added as a solvent with evenly stirring, to obtain a positive electrode slurry with a solid content of 65%. The positive electrode slurry was evenly applied on both sides of a positive electrode current collector aluminum foil and dried at room temperature (about 25°C), then the aluminum foil coated with the positive electrode slurry was transferred into an oven for further drying, and cold-pressed to obtain a positive electrode plate. The positive electrode plate was cut into rectangles of 40mm×50mm for later use, where the capacity of one side of the positive electrode ranges between 3.5 mAh/cm² and 5 mAh/cm². The mass ratio of LiNi_{0.8}Co_{0.1}Mn_{0.1}O₂, acetylene black, and polyvinylidene fluoride was 100:1:1.

**Table 1**

| Serial number | Positive electrode film layer | | Number of cycles at 25°C (cycles) | Number of cycles at 60°C (cycles) |
|---|---|---|---|---|
| | Type of first lithium salt | Mass ratio between positive electrode active material, positive electrode conductive agent, positive electrode binder, and first lithium salt | | |
| Example 1 | LiFSI | 100:1:1:1 | 284 | 289 |
| Example 2 | LiFSI | 100:1:1:3 | 365 | 327 |
| Example 3 | LiFSI | 100:1:1:5 | 448 | 332 |
| Example 4 | LiFSI | 100:1:1:7 | 432 | 320 |
| Example 5 | LiFSI | 100:1:1:10 | 402 | 317 |
| Comparative Example 1 | - | 100:1:1:0 | 235 | 245 |
| Comparative Example 2 | LiFSI | 100:1:1:1 | 251 | 267 |

As can be seen from the test results of Examples 1 to 5 and Comparative Example 1, adding the preset lithium salt into the positive electrode plate enables a lithium metal battery cell using the positive electrode plate to have a longer cycle life.

As can be seen from the test results of Examples 1 to 5 and Comparative Example 2, dispersing the first lithium salt in the positive electrode film layer may prolong the cycle life of the lithium metal battery cell more effectively. In Comparative Example 2, LiFSI was applied on the surface of the positive electrode active material as a coating by means of high-energy ball milling. During the cycling process of the battery cell, LiFSI decomposed and contributed to the formation of a positive electrode protective film, which played a role in stabilizing an interface of the positive electrode active material and improving ionic conductivity of the positive electrode active material. However, LiFSI is difficult to dissolve fully into the electrolyte solution. Therefore, during the cycling process of the lithium metal battery cell, the electrolyte solution concentration will continuously decrease, making it difficult to maintain the solvation structure of the initial high-concentration electrolyte solution, resulting in a continuous decrease in redox resistance of the electrolyte solution, and accordingly resulting in a very limited improvement effect in the cycle life of the lithium metal battery cell.

The test results of Examples 1 to 5 also show that by further adjusting the mass content of the first lithium salt in the positive electrode film layer, the cycle life of the lithium metal battery cell may be prolonged more effectively.

### Examples 6 to 11

The method for preparing the lithium metal battery cell and the method for testing the cycling performance are the same as those described in Example 3, with the exception that a second lithium salt was added into the positive electrode slurry. The type and content of the second lithium salt are detailed in Table 2.

**Table 2**

| Serial number | Positive electrode film layer | | | Number of cycles at 25°C (cycles) | Number of cycles at 60°C (cycles) |
|---|---|---|---|---|---|
| | Type of first lithium salt | Type of second lithium salt | Molar ratio of second lithium salt to first lithium salt | | |
| Example 3 | LiFSI | - | - | 448 | 332 |
| Example 6 | LiFSI | LiPF₆ | 0.1:1 | 464 | 378 |
| Example 7 | LiFSI | LiPO₂F₂ | 0.1:1 | 472 | 396 |
| Example 8 | LiFSI | LiDFOB | 0.1:1 | 481 | 384 |
| Example 9 | LiFSI | LiBF₄ | 0.1:1 | 452 | 386 |
| Example 10 | LiFSI | LiBF₄ | 0.05:1 | 458 | 351 |
| Example 11 | LiFSI | LiBF₄ | 0.2:1 | 435 | 369 |

As can be seen from the test results of Example 3 and Examples 6 to 9, adding the second lithium salt in the positive electrode film layer may prolong the cycle life of the lithium metal battery cell more effectively.

As can be seen from the test results of Example 3 and Examples 9 to 11, the degree of improvement in the cycle life of the lithium metal battery cell varies depending on the mass percent of the second lithium salt in the positive electrode film layer.

### Example 12

### (1) Preparation of a positive electrode plate

A positive electrode active material (LiNi_{0.8}Co_{0.1}Mn_{0.1}O₂), a positive electrode conductive agent (acetylene black), a positive electrode binder (polyvinylidene fluoride), and a first lithium salt (lithium bis(trifluoromethylsulfonyl)imide (LiTFSI)) were mixed at a mass ratio of 100:1:1:1, and then N-methylpyrrolidone was added as a solvent with evenly stirring, to obtain a positive electrode slurry with a solid content of 50%. The positive electrode slurry was evenly applied on both sides of a positive electrode current collector aluminum foil and dried at room temperature (about 25°C), then the aluminum foil coated with the positive electrode slurry was transferred into an oven for further drying, and cold-pressed to obtain a positive electrode plate with a preset lithium salt. The positive electrode plate was cut into rectangles of 40mm×50mm for later use, where the capacity of one side of the positive electrode ranges between 3.5 mAh/cm² and 5 mAh/cm².

### (2) Preparation of a negative electrode plate

A 50 µm lithium foil was rolled to cover an 8 µm copper foil to serve as a negative electrode plate, and then the negative electrode plate was cut into rectangles of 41 mm×51 mm for later use.

### (3) Preparation of an electrolyte solution

Ethylene glycol dimethyl ether (DME), 1,1,2,2-tetrafluoroethyl 2,2,3,3-tetrafluoropropylether (TTE), and lithium bis(fluorosulfonyl)imide (LiFSI) as a primary lithium salt were mixed evenly to obtain an electrolyte solution. The molar ratio of LiFSI to DME was 1:1.1, and the molar ratio of LiFSI to TTE was 1:1.5.

### (4) Preparation of a separator

A polyethylene porous film was used as a separator.

### (5) Preparation of a lithium metal battery cell

A piece of pre-cut positive electrode plate with the preset lithium salt and two pieces of pre-cut negative electrode plates were taken, and separated by means of the separator, and then were enclosed in an aluminum-plastic film pouch to form a stacked electrode assembly. 0.3 g of the electrolyte solution prepared above was injected, and the aluminum-plastic film pouch was sealed by hot pressing in vacuum, followed by standing at room temperature (about 25°C) for at least 6 hours. After that, the capacity and cycling performance tests were began.

**Table 3**

| Serial number | Positive electrode film layer | | Number of cycles at 25°C (cycles) | Number of cycles at 60°C (cycles) |
|---|---|---|---|---|
| | Type of first lithium salt | Mass ratio between positive electrode active material, positive electrode conductive agent, positive electrode binder, and first lithium salt | | |
| Example 3 | LiFSI | 100:1:1:5 | 448 | 332 |
| Example 12 | LiTFSI | 100:1:1:5 | 255 | 276 |

As can be seen from the test results of Examples 3 and 12, the degree of improvement in the cycle life of the lithium metal battery cell varies depending on the type of first lithium salt in the positive electrode film layer; and when LiFSI serves as the first lithium salt, the lithium metal battery cell has a longer cycle life.

### Examples 13 to 15

The method for preparing the lithium metal battery cell and the method for testing the cycling performance are the same as those described in Example 3, with the exception of the compositions of the electrolyte solution. Specific parameters are detailed in Table 4.

**Table 4**

| Serial number | Electrolyte solution | | | Number of cycles at 25°C (cycles) | Number of cycles at 60°C (cycles) |
|---|---|---|---|---|---|
| | Primary lithium salt | Primary lithium salt: DME | Primary lithium salt: TTE | | |
| Example 3 | LiFSI | 1:1.1 | 1:1.5 | 448 | 332 |
| Example 13 | LiFSI | 1:0.8 | 1:1.5 | 402 | 335 |
| Example 14 | LiFSI | 1:2 | 1:1 | 437 | 281 |
| Example 15 | LiFSI | 1:3 | 1:1 | 386 | 243 |

As can be seen from the test results of Example 3 and Examples 13 to 15, the high-concentration electrode may prolong the cycle life of the lithium metal battery cell.

### Examples 16 and 17

The method for preparing the lithium metal battery cell and the method for testing the cycling performance are the same as those described in Example 3, with the exception of the compositions of the electrolyte solution. Specific parameters are detailed in Table 5.

**Table 5**

| Serial number | electrolyte solution | | | | |
|---|---|---|---|---|---|
| | Primary lithium salt | Primary lithium salt: DME | Primary lithium salt: TTE | Number of cycles at 25°C (cycles) | Number of cycles at 60°C (cycles) |
| Example 3 | LiFSI | 1:1.1 | 1:1.5 | 448 | 332 |
| Example 16 | LiFSI | 1:1.1 | 1:1.3 | 312 | 345 |
| Example 17 | LiFSI | 1:1.1 | 1:2 | 378 | 326 |

As can be seen from the test results of Examples 3, 16 and 17, an appropriate amount of diluent enables the lithium metal battery cell to have a longer cycle life.

### Examples 18 to 21

The method for preparing the lithium metal battery cell and the method for testing the cycling performance are the same as those described in Example 14, with the exception of the compositions of the electrolyte solution. Specific parameters are detailed in Table 6.

**Table 6**

| Serial number | electrolyte solution | | | | | Number of cycles at 25°C (cycles) | Number of cycles at 60°C (cycles) |
|---|---|---|---|---|---|---|---|
| | Primary lithium salt | Secondary lithium salt | Primary lithium salt: DME | Primary lithium salt: TTE | Secondary lithium salt: Primary lithium salt | | |
| Example 14 | LiFSI | - | 1:2 | 1:1 | - | 437 | 281 |
| Example 18 | LiFSI | LiPO₂F₂ | 1:2 | 1:1 | 0.06:1 | 451 | 298 |
| Example 19 | LiFSI | LiBF₄ | 1:2 | 1:1 | 0.06:1 | 445 | 347 |
| Example 20 | LiFSI | LiBF₄ | 1:2 | 1:1 | 0.02:1 | 443 | 329 |
| Example 21 | LiFSI | LiBF₄ | 1:2 | 1:1 | 0.2:1 | 418 | 326 |

As can be seen from the test results of Example 14 and Examples 18 to 21, the presence of an appropriate amount of secondary lithium salt in the electrolyte solution may prolong the cycle life of the lithium metal battery cell more effectively.

### Example 22

The method for preparing the lithium metal battery cell and the method for testing the cycling performance are the same as those described in Example 3, with the exception of the timing of the addition of the first lithium salt.

### (1) Preparation of a positive electrode plate

A positive electrode active material (LiNi_{0.8}Co_{0.1}Mn_{0.1}O₂), a positive electrode conductive agent (acetylene black), and a positive electrode binder (polyvinylidene fluoride) were mixed at a mass ratio of 100:1:1, and then N-methylpyrrolidone was added as a solvent with evenly stirring, to obtain a positive electrode slurry with a solid content of 65%. After that, the positive electrode slurry was evenly applied on both sides of a positive electrode current collector aluminum foil and dried at room temperature (about 25°C), and the aluminum foil coated with the positive electrode slurry was transferred into an oven for further drying, and then cold-pressed to obtain a positive electrode plate with a preset lithium salt. The ethylene glycol dimethyl ether solution containing the dissolved first lithium salt, i.e., lithium bifluorosulfonyl imide (LiFSI), was applied onto the surface of the positive electrode plate. After thorough impregnation, the positive electrode plate was transferred into the oven for further drying, to obtain the positive electrode plate with the preset lithium salt. The ethylene glycol dimethyl ether solution containing the dissolved first lithium salt, i.e., lithium bis(fluorosulfonyl)imide (LiFSI), had a concentration of 0.5 mol/L, and the mass ratio of the first lithium salt to the positive electrode active material was 5:100. The positive electrode plate was cut into rectangles of 40mm×50mm for later use, where the capacity of one side of the positive electrode ranges between 3.5 mAh/cm² and 5 mAh/cm².

**Table 7**

| Serial number | Number of cycles at 25°C (cycles) | Number of cycles at 60°C (cycles) |
|---|---|---|
| Example 3 | 448 | 332 |
| Example 22 | 423 | 331 |

As can be seen from the test results of Examples 3 and 22, the timing of the addition of the first lithium salt may cause slight variations in the improvement effect in the cycle life of the lithium metal battery cell. The introduction of the first lithium salt during the preparation of the positive electrode slurry allows for a more uniform distribution of the first lithium salt in the positive electrode film layer, which facilitates the uniform diffusion of the first lithium salt into the electrolyte solution and, consequently enables the lithium metal battery cell to achieve better cycling performance.

The foregoing embodiments only exemplarily illustrate the principles and effects of the present invention, and are not intended to limit the present invention. Any person familiar with this technology can make modifications or alterations to the foregoing embodiments without departing from the spirit and scope of the present invention. Therefore, all equivalent modifications or alterations made by a person of ordinary skill in the technical field without departing from the spirit and technical ideas disclosed in the present invention shall still fall within the claims of the present invention.

## Claims

1. A positive electrode plate, comprising a positive electrode current collector and a positive electrode film layer located on at least one side of the positive electrode current collector, wherein a preset lithium salt is dispersed in the positive electrode film layer, and the preset lithium salt comprises a first lithium salt having a structure shown in Formula 1, where R₁ and R₂ each independently comprise a fluorine atom or a C1-C6 fluoroalkyl group, and M₁ is Li,

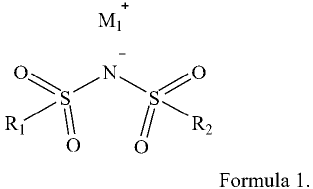

2. The positive electrode plate according to claim 1, wherein R₁ and R₂ each independently comprise a fluorine atom or a trifluoromethyl group.

3. The positive electrode plate according to any one of claims 1 and 2, wherein the mass percent of the first lithium salt in the positive electrode film layer ranges from 0.8 wt% to 10 wt%.

4. The positive electrode plate according to claim 3, wherein the mass percent of the first lithium salt in the positive electrode film layer ranges from 2 wt% to 6.5 wt%.

5. The positive electrode plate according to any one of claims 1 to 4, wherein the preset lithium salt further comprises a second lithium salt, and the second lithium salt comprises one or more of lithium hexafluorophosphate, lithium tetrafluoroborate, lithium perchlorate, lithium hexafluoroarsenate, lithium trifluoromethanesulfonate, lithium difluoro(oxalato)borate, lithium bis(oxalato)borate, lithium difluorophosphate, lithium difluoro bis(oxalato)phosphate, and lithium tetrafluoro(oxalato)phosphate.

6. The positive electrode plate according to claim 5, wherein the second lithium salt comprises one or more of lithium hexafluorophosphate, lithium tetrafluoroborate, and lithium difluorophosphate.

7. The positive electrode plate according to any one of claims 5 and 6, wherein the molar ratio of the second lithium salt to the first lithium salt ranges from 0.02:1 to 0.2:1.

8. The positive electrode plate according to claim 7, wherein the molar ratio of the second lithium salt to the first lithium salt ranges from 0.02:1 to 0.1:1.

9. The positive electrode plate according to any one of claims 1 to 8, wherein the positive electrode film layer comprises a positive electrode active material, and the positive electrode active material comprises one or more of lithium transition metal oxide, lithium-containing phosphate, and respective modified compounds thereof.

10. A battery cell, comprising the positive electrode plate according to any one of claims 1 to 9.

11. The battery cell according to claim 10, wherein the battery cell comprises an electrolyte solution, the electrolyte solution comprises an electrolyte salt and a solvent, the electrolyte salt comprises a primary lithium salt, and the primary lithium salt comprises a first lithium salt having a structure shown in Formula 1, where R₁ and R₂ each independently comprise a fluorine atom or a C1-C6 fluoroalkyl group, and M₁ is Li,

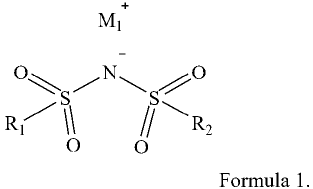

12. The battery cell according to claim 11, wherein the sum of the mass of the first lithium salt in the positive electrode film layer and the mass of the first lithium salt in the electrolyte solution is greater than the saturated dissolved quantity of the first lithium salt in the electrolyte solution.

13. The battery cell according to any one of claims 11 and 12, wherein the solvent comprises an ether compound.

14. The battery cell according to claim 13, wherein the solvent comprises one or more of methyl n-butyl ether, tetrahydrofuran, ethylene glycol dimethyl ether, tetraethylene glycol dimethyl ether, triethylene glycol dimethyl ether, diethylene glycol dimethyl ether, ethylene glycol diethyl ether, 1,2-dimethoxypropane, 1, 3-dimethoxypropane, diethylene glycol dimethyl ether, triethylene glycol dimethyl ether, and tetraethylene glycol dimethyl ether.

15. The battery cell according to any one of claims 11 to 14, wherein the molar ratio of the primary lithium salt to the solvent in the electrolyte solution ranges from 1:0.8 to 1:3.

16. The battery cell according to claim 15, wherein the molar ratio of the primary lithium salt to the solvent in the electrolyte solution ranges from 1:1 to 1:2.

17. The battery cell according to any one of claims 11 to 16, wherein the electrolyte salt further comprises a secondary lithium salt, and the secondary lithium salt comprises one or more of lithium hexafluorophosphate, lithium tetrafluoroborate, lithium perchlorate, lithium hexafluoroarsenate, lithium trifluoromethanesulfonate, lithium difluoro(oxalato)borate, lithium bis(oxalato)borate, lithium difluorophosphate, lithium difluoro bis(oxalato)phosphate, and lithium tetrafluoro(oxalato)phosphate.

18. The battery cell according to claim 17, wherein the molar ratio of the secondary lithium salt to the primary lithium salt in the electrolyte solution ranges from 0.02:1 to 0.2:1.

19. The battery cell according to claim 18, wherein the molar ratio of the secondary lithium salt to the primary lithium salt in the electrolyte solution ranges from 0.05:1 to 0.1:1.

20. The battery cell according to any one of claims 11 to 19, wherein the electrolyte solution further comprises a diluent, and the molar ratio of the primary lithium salt to the diluent in the electrolyte solution ranges from 1:0.5 to 1:5.

21. The battery cell according to claim 20, wherein the diluent comprises one or more of a fluoroether diluent, an aromatic diluent, and a fluorinated aromatic diluent.

22. The battery cell according to claim 21, wherein the diluent comprises one or more of 1,1,2,2-tetrafluoroethyl-2,2,3,3-tetrafluoropropyl ether, 1,1,2,2-tetrafluoroethyl-2,2,2-trifluoroethyl, 1-(1,1,2,2-tetrafluoroethoxy)propane, ethyl 1,1,2,2-tetrafluoroethyl ether, bis(2,2,2-trifluoroethyl) ether, difluoromethyl 2,2,3,3-tetrafluoropropyl ether, heptafluoropropyl 1,2,2,2-tetrafluoroethyl ether, 2,2,3,3,3-pentafluoropropyl-1,1,2,2-tetrafluoroethyl ether, bis-(1,2,2,2-tetrafluoroethyl) ether, difluoromethyl 1,1,2,3,3,3-pentafluoropropyl ether, 1,1,2,3,3,3-pentafluoropropyl-2,2,2-trifluoroethyl ether, 1H,1H,5H-octafluoropentyl-1,1,2,2-tetrafluoroethyl ether, benzene, 3-fluorobenzene, m-difluorobenzene, 1,3,5-trifluorobenzene, and anisole.

23. The battery cell according to any one of claims 10 to 22, wherein the battery cell is a lithium metal battery cell or an anode-free lithium metal battery cell.

24. A battery, comprising the battery cell according to any one of claims 10 to 23.

25. An electrical apparatus, comprising the battery according to claim 24, wherein the battery is configured to supply electric energy.
